# EUROPÄISCHE PATENTSCHRIFT

(11) **EP 3 467 988 B1**
(45) Veröffentlichungstag und Bekanntmachung des Hinweises auf die Patenterteilung: **16.09.2020**
(21) Anmeldenummer: 18184290.7
(22) Anmeldetag: 18.07.2018
(51) Int. Cl.: H02J 3/38

(54) **DEZENTRALE ENERGIEVERSORGUNGS- UND IT-HOSTING-VORRICHTUNG**
DECENTRALISED POWER DISTRIBUTION AND IT HOSTING DEVICE
DISPOSITIF D'ALIMENTATION EN ÉNERGIE ET D'HÉBERGEMENT IT DÉCENTRALISÉ

(30) Priorität: 04.10.2017 DE 102017122963
(43) Veröffentlichungstag der Anmeldung: 10.04.2019
(73) Patentinhaber: WestfalenWIND IT GmbH & Co. KG, 33100 Paderborn (DE)
(72) Erfinder: Schomaker, Gunnar, 33102 Paderborn (DE); Dubberke, Frithjof, 33098 Paderborn (DE); Lackmann, Johannes, 33104 Paderborn (DE)

(56) Entgegenhaltungen:
- EP-A1- 3 032 685
- US-A1- 2011 278 928
- US-A1- 2015 382 511

## Beschreibung

Die Erfindung betrifft eine dezentrale Energieversorgungs- und IT-Hosting-Vorrichtung, bei der ein Rechenknoten, das heißt eine autarke Rechenanlage mit einem Rechenmodul und einem Datenspeichermodul im Turm einer Windenergieanlage vorgesehen ist. Der Rechenknoten wird hierbei im Regelfall mit Energie eines Windkraftgenerators der Windenergieanlage betrieben.

Eine derartige Vorrichtung ist beispielsweise in der US 2011/278928 A1 beschrieben. Die US 2015/382511 A1 beschreibt ein Rechenzentrum üblicher Art. Eine Windenergieanlage und das zugehörige Betriebsverfahren sind in der EP 3 032 685 A1 beschrieben.

Mit zirka 34 % im Jahresmittel wird schon heute ein großer Stromanteil in der Bundesrepublik Deutschland durch erneuerbare Energien abgedeckt. Im Kreis Paderborn beträgt dieser Anteil sogar 70 %. Jeweils hat die Windenergie hieran einen erheblichen Anteil.

An windreichen Tagen übersteigt die Erzeugungsleistung mithin deutlich den lokalen Verbrauch. Unter besonderen Bedingungen, beispielsweise bei Starkwind oder einer Kombination von Wind und Sonne können die Hochspannungsnetze die bereitgestellten Leistungen nicht aufnehmen. Netzbetreiber müssen dann aus Gründen der Netzsicherheit einzelne Erzeugereinheiten, beispielsweise einzelne Windparks, auf Basis einer Härtefallregelung nach dem Gesetz für den Ausbau erneuerbarer Energien (Erneuerbare-Energien-Gesetz, EEG) vom Netz nehmen.

Ein Ausbau der Netze ist insofern eine wichtige und vordringliche Aufgabe der Politik. Dieser Ausbau ist jedoch aufwendig, teuer und langwierig. Insofern muss es das Ziel sein, lokal erzeugte Energie möglichst auch vor Ort zu nutzen. Dies ist nicht nur gesamtökonomisch sinnvoll; es lässt sich vor allem auch die lokale Wertschöpfung steigern und die Stromnetze können regional sowie überregional entlastet werden.

Verschiedene Wege zur "Veredelung" insbesondere erneuerbare Energien bieten sich hierzu an. So ist es beispielsweise so, dass der globale Bedarf an Rechenleistung und digitaler Speicherkapazität einem stetigen Wachstum unterliegt. Schätzungen zu Folge verbrauchten IT-Anwendungen im Jahr 2016 etwa 10 % des globalen Gesamtstrombedarfs. Dies entspricht in erster Näherung dem Energiebedarf des globalen Luftverkehrs. Die Tendenz ist hier stark steigend.

Die vorliegende Erfindung verfolgt insofern den Ansatz, den vor Ort erzeugten Strom aus erneuerbaren Energien und insbesondere aus Windenergie in Rechenleistung beziehungsweise Datenspeicherleistung zu transformieren. So arbeiten Rechen- und Datenspeicheranwendungen höchst energieintensiv. Gleichzeitig ist eine sehr kompakte Bauform beziehungsweise eine hohe Energiedichte ihrer Komponenten gegeben. Dabei können digitale Daten anders als Strom beziehungsweise Wärme reversibel und kostengünstig distribuiert werden.

Aufgabe der vorliegenden Erfindung ist es also, ein Konzept zur verbesserten lokalen Nutzung regenerativer Energie für Rechen- und Datenspeicheranwendungen und zum Aufbau dezentraler IT-Strukturen anzugeben.

Zur Lösung der Aufgabe umfasst die Erfindung die Merkmale des Patentanspruchs 1. Hier ist es insbesondere so, dass die dezentrale Energieversorgungs- und IT-Hosting-Vorrichtung eine Windenergieanlage mit einem vertikal erstreckten Turm, mit einem endseitig an dem Turm in einer Horizontalebene drehbar gehaltenen Maschinengehäuse, mit einem von dem Maschinengehäuse umgriffenen Windkraftgenerator, mit einem mit dem Windkraftgenerator zusammenwirkenden Rotor, mit einer von dem Windkraftgenerator zu einer externen Energieleitung geführten Energieeinspeiseleitung und mit einer Betriebssteuerung sowie einen in dem Turm der Windenergieanlage vorgesehenen Rechenknoten mit wenigstens einem Rechenmodul und mit wenigstens einem Datenspeichermodul umfasst. Das Rechenmodul stellt hierbei die Rechenleistung und das Datenspeichermodul die Datenspeicherleistung zur Verfügung. Zu der dezentralen Energieversorgungs- und IT-Hosting-Vorrichtung ist eine Datenleitung geführt, welche als Primäranschluss zur Realisierung eines Datenfernzugriffs auf das Rechenmodul beziehungsweise das Datenspeichermodul des Rechenknotens einerseits und die Betriebssteuerung der Windenergieanlage andererseits dient. Das Rechenmodul und das Datenspeichermodul des Rechenknotens werden dabei zum einen über eine interne Regelenergieversorgungsleitung mit dem Windkraftgenerator der Windenergieanlage verbunden derart, dass von dem Windkraftgenerator über die interne Regelenergieversorgungsleitung bereitgestellte elektrische Energie für den Betrieb des Rechenknotens genutzt wird. Zum anderen wird der Rechenknoten mit einer weiteren, externen Energiequelle verbunden.

Der besondere Vorteil der Erfindung besteht darin, dass im Regelbetrieb der erfindungsgemäßen Vorrichtung lokal erzeugte Windenergie unmittelbar zum Betrieb des Rechenknotens verwendet werden kann. Diese Energie muss nicht in ein Versorgungsnetzwerk eingespeist werden. Es ist insofern so, dass das Versorgungsnetzwerk entlastet wird beziehungsweise einer Überlastung des Versorgungsnetzwerks entgegengewirkt wird. Zudem ist es so, dass bei einem Ausbau des Versorgungsnetzwerks mithin eine geringere Aufnahme- und Übertragungskapazität realisiert werden kann.

Es ist dabei erfindungsgemäß vorgesehen, dass eine Energieversorgung für den Rechenknoten redundant bereitgestellt wird. Neben der internen Regelenergieversorgungsleitung, über die der Rechenknoten im Regelbetrieb mit Energie vom Windkraftgenerator versorgt wird, ist der Rechenknoten zur Versorgung desselben mit Energie an eine weitere, externe Energiequelle angeschlossen. Diese externe Energiequelle versorgt den Rechenknoten insbesondere dann, wenn von der Windenergieanlage beziehungsweise dem Windkraftgenerator keine oder nicht ausreichend viel Leistung für den Betrieb des Rechenknotens bereitgestellt wird. Dies kann bei ungünstigen Witterungsverhältnissen beziehungsweise bei fehlendem Wind der Fall sein. Dies kann auch dann der Fall sein, wenn die Windenergieanlage beispielsweise aus Wartungsgründen nicht betrieben wird oder wenn die Windenergieanlage beziehungsweise der Windpark, in dem die Windenergieanlage eingebunden ist, nach der Härtefallregelung vom Netz genommen werden muss.

Nach der Erfindung ist auch die datentechnische Anbindung des Rechenknotens redundant ausgebildet. Neben dem Primäranschluss ist insofern ein Sekundäranschluss gebildet für das Rechenmodul und das Datenspeichermodul des Rechenknotens. Dabei ist die als Primäranschluss zu der Vorrichtung geführte Datenleitung als ein Lichtwellenleiter ausgebildet. Der Sekundäranschluss ist beispielsweise kabellos beziehungsweise nicht leitungsgebunden als Luftschnittstelle beziehungsweise als Funkschnittstelle realisiert. Beispielsweise kann eine Mobilfunkverbindung oder eine Richtfunkstrecke eingerichtet sein.

Nach der Erfindung sind der Primäranschluss einerseits und der Sekundäranschluss andererseits an unterschiedliche Datenhauptstränge (Backbones) angebunden. Die Redundanz und Verfügbarkeit der erfindungsgemäßen Vorrichtung wird so weiter verbessert. Vorteilhaft ist eine sichere und zuverlässige Möglichkeit zum Zugriff auf den Rechenknoten dann auch gewährleistet, wenn ein Datenhauptstrang ausfällt oder durch eine Störung nicht uneingeschränkt benutzt werden kann.

Nach einer Weiterbildung der Erfindung dient ein externes Verteilnetz des Versorgungsnetzwerks als weitere Energiequelle für den Rechenknoten. Es ist insofern der Rechenknoten über eine Energieversorgungsleitung mit dem Verteilnetz verbunden und eine redundante Energieversorgung über die öffentliche Versorgungsinfrastruktur bereitgestellt.

Im Sinne der Erfindung umfasst ein Versorgungsnetzwerk verschiedene Ebenen. Die einzelne Windenergieanlage oder ein ganzer Windpark ist insofern an ein typischerweise bei 110 kV betriebenes Verteilnetz angeschlossen. Das Verteilnetz, welches einen eher lokalen beziehungsweise regionalen Charakter hat, ist darüber hinaus verbunden mit einem Übertragungsnetz, welches beispielsweise bei 380 kV betrieben wird. Das Übertragungsnetz und das Verteilnetzwerk können durch unterschiedliche Betreiberfirmen betrieben werden. Die Energie für das Versorgungsunternehmen wird über verschiedene zentrale Kraftwerke und eine große Vielzahl lokaler Erzeuger, beispielsweise Windenergieanlagen oder Photovoltaikanlagen bereitgestellt. In diesem Sinne werden das Versorgungsunternehmen im Allgemeinen und die Verteil- beziehungsweise Übertragungsnetze im Speziellen als externe Energiequellen betrachtet.

Nach einer Weiterbildung der Erfindung werden zur weiteren Erhöhung der Betriebssicherheit zwei Energieversorgungsleitungen zu einem Rechenknoten geführt. Der Rechenknoten kann dann selbst in dem Fall sicher betrieben werden, dass lokal keine Energie bereitgestellt wird und eine Energieversorgungsleitung im Rahmen der Energieversorgung ausfällt.

Insbesondere kann vorgesehen sein, dass die zwei Energieversorgungsleitungen zwei unterschiedlichen Verteilnetzen zugeordnet sind. Der Rechenknoten ist dann mit zwei externen Energiequellen verbunden. Eine Störung in einem der Verteilnetze hat dann keine Auswirkungen auf den sicheren Betrieb des Rechenknotens. Die zwei unterschiedlichen Verteilnetze können wiederum zwei unterschiedlichen Übertragungsnetzen zugeordnet sein.

Nach einer Weiterbildung der Erfindung können für den Rechenknoten vor Ort ein bevorzugt mit fossilen Brennstoffen betriebener Notstromgenerator und/oder eine unterbrechungsfreie Stromversorgung (USV) vorgesehen sein. Jeweils ergibt sich hierdurch eine weitere Verbesserung in Bezug auf die Verfügbarkeit des Rechenknotens.

Nach einer Weiterbildung der Erfindung steht für die Betriebssteuerung der Windenergieanlage und für den Rechenknoten eine gemeinsame Kühleinrichtung zur Verfügung. Die gemeinsame Kühleinrichtung ist beispielsweise außerhalb des Turms der Windenergieanlage in unmittelbarer Nähe zum Turm vorgesehen. Alternativ kann die Kühleinrichtung auch innerhalb der Windenergieanlage und dort insbesondere in dem Turm vorgesehen sein.

Die erfindungsgemäße dezentrale Energieversorgungs- und IT-Hosting-Vorrichtung kann beispielsweise in einem Windpark installiert sein, in dem eine Mehrzahl von Windenergieanlagen installiert ist und koordiniert betrieben wird. In dem Windpark können eine einzige Windenergieanlage, ein Teil der installierten Windenergieanlagen oder alle Windenergieanlagen durch das Vorsehen der Rechenknoten zu einer erfindungsgemäßen Energieversorgungs- und IT-Hosting-Vorrichtung erweitert sein.

Beispielsweise können bei einem Betrieb der erfindungsgemäßen dezentralen Energieversorgungs- und IT-Hosting-Vorrichtung in einem Windpark die weiteren Windenergieanlagen des Windparks als externe Energiequellen im Sinne der Erfindung dienen und zur Bereitstellung von elektrischer Energie für den einen Rechenknoten dienen, wenn die Regelenergieversorgung für diesen Rechenknoten beispielsweise aufgrund eines Defekts an dem zugeordneten Windkraftgenerator oder einer Unterbrechung der Regelenergieversorgungsleitung gestört ist.

Im Rahmen einer verbesserten Datensicherheit und Verfügbarkeit können beispielsweise gespeicherte Daten auf benachbarten Rechenknoten verschiedener Windenergieanlagen in einem Windpark redundant vorgehalten werden mit der Folge, dass die Verfügbarkeit in Bezug auf die Datenspeicherleistung weiter verbessert wird. In analoger Weise kann Rechenleistung optional von verschiedenen Rechenknoten eines Windparks oder anderweitig benachbarter Windenergieanlagen bereitgestellt werden. Mehrere Rechenknoten bilden insofern vorrichtungsübergreifend ein Rechencluster.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Fig. 1: eine Grundrissdarstellung für eine erfindungsgemäße dezentrale Energieversorgungs- und IT-Hosting-Vorrichtung,
- Fig. 2: eine Prinzipdarstellung eines Versorgungsnetzwerks mit einer Vielzahl von erfindungsgemäßen Energieversorgungs- und IT-Hosting-Vorrichtungen, zwei Verteilnetzen und zwei Übertragungsnetzen,
- Fig. 3: eine konzeptionelle Darstellung für eine redundante Energieversorgung eines Rechenknotens der erfindungsgemäßen Energieversorgungs- und IT-Hosting-Vorrichtung und
- Fig. 4: eine Prinzipdarstellung eines redundanten Datenfernzugriffs auf den Rechenknoten der erfindungsgemäßen dezentralen Energieversorgungs- und IT-Hosting-Vorrichtung.

Eine erfindungsgemäße dezentrale Energieversorgungs- und IT-Hosting-Vorrichtung umfasst zum einen eine Windenergieanlage 1 mit einem vertikal erstreckten Turm 2, mit einem an einem freien Ende des Turms 2 endseitig vorgesehenen, in einer Horizontalebene drehbar gehaltenen Maschinengehäuse, mit einem von dem Maschinengehäuse umgriffenen Windkraftgenerator, mit einem mit dem Windkraftgenerator zusammenwirkenden Rotor, mit einer von dem Windkraftgenerator zu einer externen Energieleitung geführten Energieeinspeiseleitung 16 und mit einer Betriebssteuerung 6, sowie einen Rechenknoten 3 mit wenigstens einem Rechenmodul und mit wenigstens einem Datenspeichermodul. Der Rechenknoten 3 mit dem Rechenmodul und dem Datenspeichermodul ist in dem Turm 2 der Windenergieanlage 1 vorgesehen.

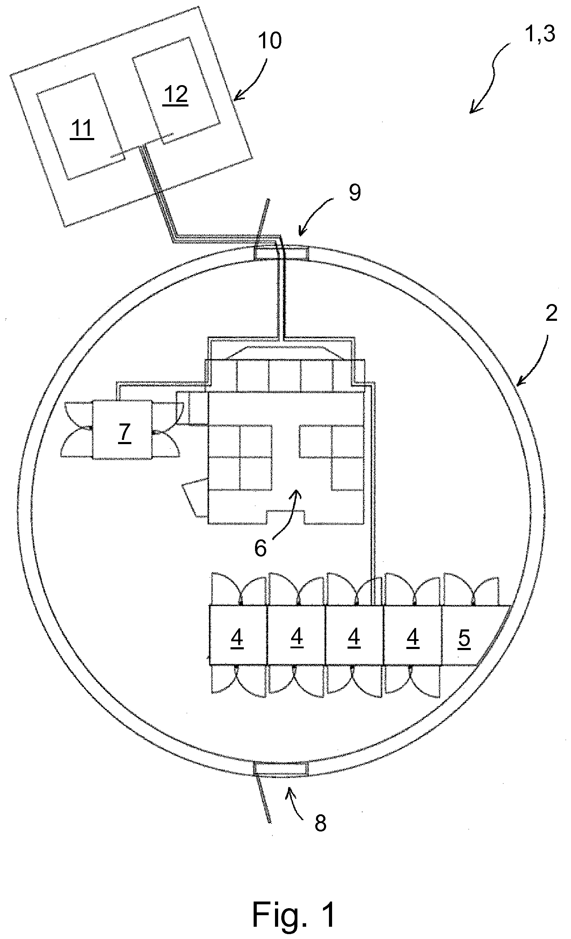

Fig. 1 zeigt einen Grundriss der dezentralen Energieversorgungs- und IT-Hosting-Vorrichtung mit dem Turm 2 der Windenergieanlage 1. Im Inneren des Turms 2 sind der Rechenknoten 3 mit im vorliegenden Fall vier Serverschränken 4 und einer elektrischen Unterverteilung 5 für die in den Serverschränken 4 vorgesehenen Rechenmodule und Datenspeichermodule des Rechenknotens 3 installiert. Ferner ist in dem Turm 2 die Betriebssteuerung 6 der Windenergieanlage 1 und eine unterbrechungsfreie Stromversorgung 7 für den Rechenknoten 3 installiert. Die unterbrechungsfreie Stromversorgung 7 ist so ausgelegt, dass der gesamte Rechenknoten 3 mitsamt den betriebsnotwendigen Peripheriegeräten bei einem Ausfall der sonstigen Energieversorgung gesichert heruntergefahren werden kann. Der Zugang zum Inneren des Turms 2 ist über eine Hauptzugangstür 8 und einen Notausstieg 9 realisiert.

Außerhalb des Turms 2 ist eine Kühleinrichtung 10 der erfindungsgemäßen dezentralen Energieversorgungs- und IT-Hosting-Vorrichtung in Form einer redundanten Freiluftkühlung vorgesehen. Die Freiluftkühlung 10 umfasst zwei Rückkühler 11, 12. Die Freiluftkühlung 10 dient zum Kühlen des Rechenknotens 3 beziehungsweise seiner Komponenten. Insbesondere kann vorgesehen sein, dass die unterbrechungsfreie Stromversorgung 7, wenigstens einzelne Komponenten der elektrischen Unterverteilung 5 sowie die Rechenmodule und Datenspeichermodule des Rechenknotens 3 von der Kühleinrichtung 10 jedenfalls temporär gekühlt werden.

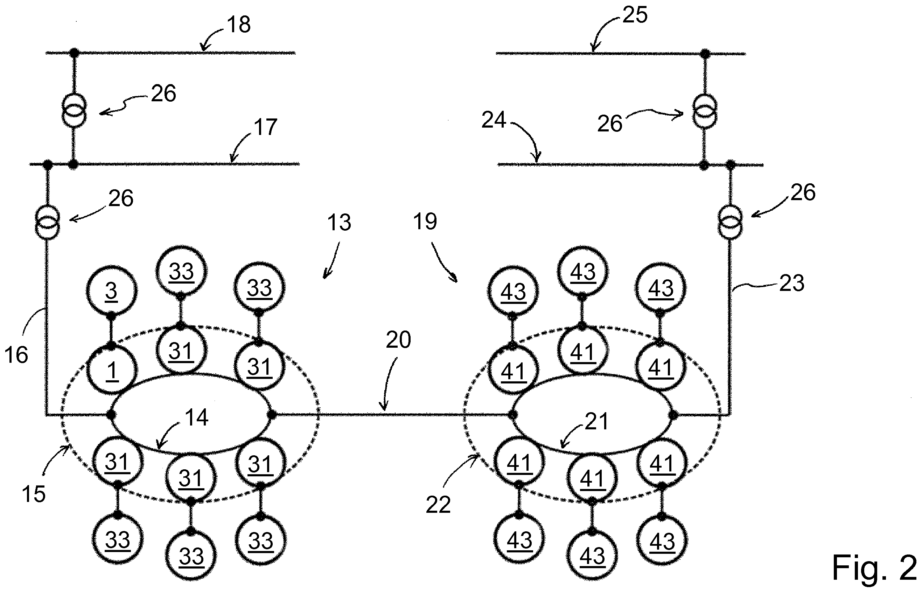

Die dezentrale Energieversorgungs- und IT-Hosting-Vorrichtung nach Fig. 1 ist beispielsweise Teil einer Versorgungsinfrastruktur beziehungsweise Versorgungsunternehmen, wie es auszugsweise in Fig. 2 dargestellt ist. Die in Fig. 1 dargestellte Windenergieanlage 1 befindet sich dabei gemeinsam mit weiteren Windenergieanlagen 31 in einem ersten Windpark 13. Die weiteren Windenergieanlagen 31 sind jeweils mit einem Rechenknoten 33 ausgerüstet und bilden insofern ebenfalls erfindungsgemäße dezentrale Energieversorgungs- und IT-Hosting-Vorrichtungen im Sinne der Erfindung.

Innerhalb des Windparks 13 sind die Windenergieanlagen 1, 31 sowie die Rechenknoten 3, 33 über eine vorliegend ringförmig geführte Energieleitung 14 energietechnisch verbunden. Die Windenergieanlagen 1, 31 des erstens Windparks 13 sind zudem über eine erste Energieversorgungsleitung 16 mit einem ersten Verteilnetz 17 und das erste Verteilnetz 17 mit einem ersten Übertragungsnetz 18 verbunden. Die Energieversorgungsleitung 16 dient zugleich als Energieeinspeiseleitung, über die in dem ersten Windpark 13 gewonnene und nicht Vorort etwa für den Betrieb der Rechenknoten 3,33 verwendete Energie in das erste Verteilnetz 17 eingespeist wird.

Energetisch ist der erste Windpark 13 mit einem exemplarisch analog aufgebauten zweiten Windpark 19 über eine Energieverbindungsleitung 20 verbunden. Der zweite Windpark 19 verfügt insofern über eine Mehrzahl von Windenergieanlagen 41 sowie den Windenergieanlagen 41 jeweils zugeordneten Rechenknoten 43, eine ringförmige geführte Energieleitung 21 sowie eine Datenringleitung 22, über die die Windenergieanlagen 41 einerseits und die Rechenknoten 43 andererseits energetisch und datentechnisch gekoppelt sind. Der zweite Windpark 19 ist zudem über eine zweite Energieversorgungsleitung 23 mit einem zweiten Verteilnetz 24 und das zweite Verteilnetz 24 mit einem zweiten Übertragungsnetz 25 verbunden. Auch hier dient die zweite Energieversorgungsleitung 23 zugleich als Energieeinspeiseleitung für den zweiten Windpark 19.

Da die Übertragungsnetze 18, 25 beispielsweise bei einer Spannung von 380 kV und die Verteilnetze 17, 24 bei einer geringeren Spannung von typischerweise 110 kV betrieben werden, ist zwischen den Verteilnetzen 17, 24 und den Übertragungsnetzen 18, 25 eine Umspannung 26 vorgesehen. In analoger Weise ist ebenfalls eine Umspannung zwischen den Verteilnetzen 17, 24 und den ringförmigen Energieleitungen 14, 21 der Windparks 13, 19 vorgesehen, da die Windparks 13, 19 üblicherweise bei einer Spannung von 30 kV betrieben werden.

Im Regelbetrieb wird der Rechenknoten 3 von einem Windkraftgenerator der ersten Windenergieanlage 1 mit Energie versorgt. Von dem Windkraftgenerator der ersten Windenergieanlage 1 ist zu diesem Zweck eine Regelenergieversorgungsleitung 27 vorgesehen. Die Regelenergieversorgungsleitung 27 ist beispielsweise über die in Fig. 2 nicht dargestellte unterbrechungsfreie Stromversorgung 7 des Rechenknotens 3 und die Betriebssteuerung 6 der Windenergieanlage 1 geführt.

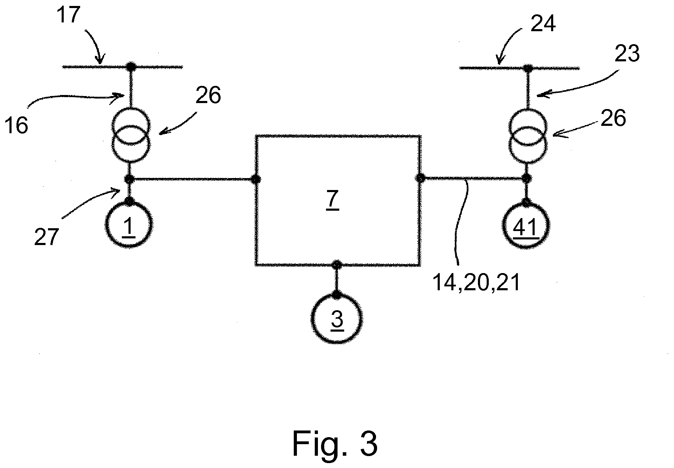

Fig. 3 verdeutlicht die redundante Energieversorgung für den Rechenknoten 3 exemplarisch. Der Rechenknoten 3 ist zum einen über die unterbrechungsfreie Stromversorgung 7 abgesichert und über die Regelenergieversorgungsleitung 27 mit dem Windkraftgenerator der ersten Windenergieanlage 1 verbunden. Sofern der Windkraftgenerator der ersten Windenergieanlage 1 ausfällt oder die Regelenergieversorgungsleitung 27 unterbrochen ist, kann der Rechenknoten 3 über die erste Energieversorgungsleitung 16 aus dem ersten Verteilnetz 17 mit Energie versorgt werden. Das erste Verteilnetz 17 dient dann als externe Energiequelle für den Rechenknoten 3.

Zusätzlich kann der Rechenknoten 3 weitergehend redundant mit elektrischer Energie versorgt werden. Beispielsweise kann bei einer Störung im ersten Windpark 13 eine Windenergieanlage 41, welche sich im zweiten Windpark 19 befindet, Energie zum Betrieb des Rechenknotens 3 liefern. Der Rechenknoten 3 ist insofern über die ringförmige Energieleitungen 14, 21 und die Energieverbindungsleitung 20 mit der in dem zweiten Windpark 19 vorgesehenen Windenergieanlage 41 verbunden. In analoger Weise kann auch das zweite Verteilnetz 24 Energie für den Betrieb des Rechenknotens 3 bereitstellen, an das der zweite Windpark 19 über die zweite Energieversorgungsleitung 23 angebunden ist.

Eine weitere Redundanz in Bezug auf die Energieversorgung kann beispielsweise mittels eines nicht dargestellten Notstromgenerators realisiert werden, welcher in Betrieb genommen wird, sofern beispielsweise alle externen Energieversorgungsleitungen für den Rechenknoten 3 unterbrochen werden. Die Inbetriebnahme des Notstromgenerators sollte dabei innerhalb der Zeitspanne erfolgen, in der die unterbrechungsfreie Stromversorgung 7 den sicheren Betrieb des Rechenknotens 3 gewährleistet.

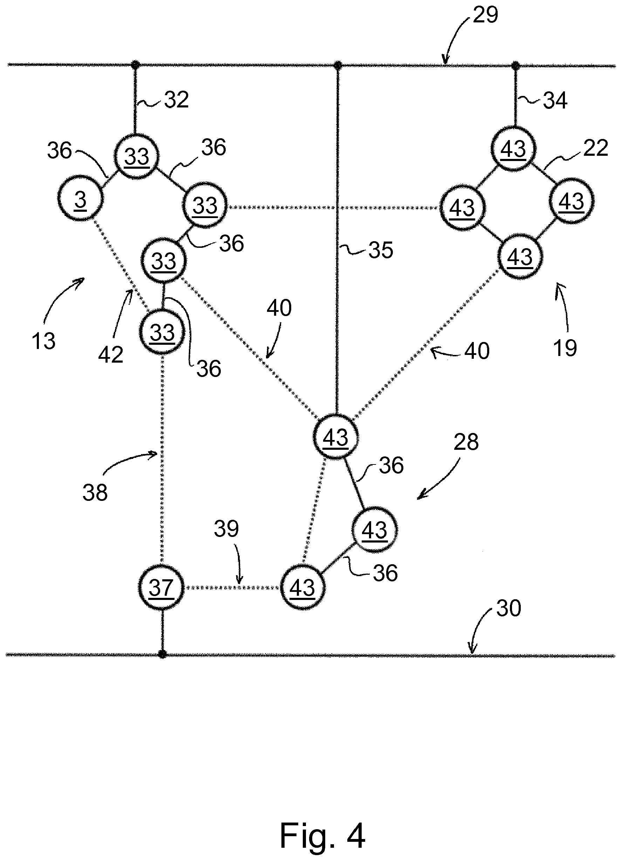

Neben der redundanten Energieversorgung wird die Betriebssicherheit und Verfügbarkeit der verschiedenen Rechenknoten 3, 33, 43 durch die Möglichkeit zur Realisierung eines Fernzugriffs auf die Rechenknoten 3, 33, 43 mit den Rechenmodulen und den Datenspeichermodulen beziehungsweise auf die in den Rechenknoten 3, 33, 43 gespeicherten Daten bestimmt. Insofern zeigt Fig. 4 ein Beispiel zur Realisierung eines redundanten Datenfernzugriffs. Es sind exemplarisch der erste Windpark 13, der zweite Windpark 19 und ein weiterer Windpark 28 dargestellt. Jeweils sind die Windparks 13, 19, 28 datentechnisch mit einem ersten Datenhauptstrang (Backbone) 29 und einem zweiten Datenhauptstrang (Backbone) 30 verbunden. Zur Anbindung an den ersten Datenhauptstrang 29 ist für jeden Windpark 13, 19, 28 eine eigene Datenleitung 32, 34, 35 vorgesehen, welche beispielsweise als Lichtwellenleiter realisiert ist und eine ausreichende Übertragungsbandbreite bereitstellt. Innerhalb der Windparks 12, 19, 28 kann dann die weitere datentechnische Kopplung in Bezug auf den ersten Datenhauptstrang 29 beispielsweise über die Datenringleitung 15 oder eine offene Netzwerkleitung 36 erfolgen.

Eine Kopplung der Rechenknoten 3, 33, 43 an den zweiten Datenhauptstrang 30 erfolgt im vorliegenden Ausführungsbeispiel mithilfe einer Direktfunkverbindung. Zu diesem Zweck ist eine unmittelbar mit dem zweiten Datenhauptstrang 30 verbundene Sende- und Empfangseinheit 37 vorgesehen, welche eine Richtfunkstrecke 38, 39 zu dem ersten und dem zweiten Windpark 13, 19 aufbaut. Weitere Richtfunkstrecken 40 zwischen den Windparks 13, 19, 28 beziehungsweise windparkinterne Richtfunkstrecken 42 gewährleisten, dass jeder Rechenknoten 3, 33, 43 mit dem zweiten Datenhauptstrang 30 verbunden ist.

Gleiche beziehungsweise gleichartige Bauteile und Bauteilfunktionen sind durch gleiche Bezugszeichen gekennzeichnet.

Die Erfindung ist nicht auf die dargestellten Ausführungsbeispiele beschränkt. Beispielsweise kann nach der Erfindung vorgesehen sein, dass die Windenergieanlagen 1, 31, 41 über die erste Energieversorgungleitung 16 und die zweite Energieversorgungsleitung 23 an ein gemeinsames Verteilnetz und/oder ein gemeinsames Übertragungsnetz angebunden sind. Es muss insofern nicht zwingend eine energetische Verbindung zu zwei verschiedenen Verteilnetzen 17, 24 beziehungsweise zwei verschiedenen Übertragungsnetzen 18, 25 realisiert sein.

Beispielsweise kann darauf verzichtet sein, die erfindungsgemäße dezentrale Energieversorgungs- und IT-Hosting-Vorrichtung in einem Windpark oder einem anderem Cluster zu betreiben.

## Patentansprüche

1. Dezentrale Energieversorgungs- und IT-Hosting-Vorrichtung umfassend
- eine Windenergieanlage (1, 31, 41) mit einem vertikal erstreckten Turm (2), mit einem endseitig an dem Turm (2) in einer Horizontalebene drehbar gehaltenen Maschinengehäuse, mit einem von dem Maschinengehäuse umgriffenen Windkraftgenerator, mit einem mit dem Windkraftgenerator zusammenwirkenden Rotor, mit einer von dem Windkraftgenerator zu einer externen Energieleitung (17, 24) geführten Energieeinspeiseleitung (16, 23) und mit einer Betriebssteuerung (6),
- einen in dem Turm (2) der Windenergieanlage (1, 31, 41) vorgesehenen Rechenknoten (3, 33, 43) mit wenigstens einem Rechenmodul und mit wenigstens einem Datenspeichermodul,
weiterhin aufweisend eine zu der Vorrichtung geführte Datenleitung (32, 34, 35), die als Primäranschluss zur Realisierung eines Fernzugriffs auf das Rechenmodul und/oder das Datenspeichermodul des Rechenknotens (3, 33, 43) eingerichtet ist und wobei das Rechenmodul und das Datenspeichermodul des Rechenknotens (3, 33, 43)
- zum einen über eine interne Regelenergieversorgungsleitung (27) mit dem Windkraftgenerator der Windenergieanlage (1, 31, 41) derart verbunden sind, dass von dem Windkraftgenerator über die interne Regelenergieversorgungsleitung (27) elektrische Energie für den Betrieb des Rechenknotens (3, 33, 43) bereitgestellt wird, und
- zum anderen mit wenigstens einer weiteren externen Energiequelle verbunden sind,
**dadurch gekennzeichnet, dass** die zu der Vorrichtung geführte Datenleitung (32, 34, 35) als Primäranschluss auch zur Realisierung eines Fernzugriffs auf die Betriebssteuerung (6) der Windenergieanlage (1, 31, 41) peingerichtet ist, dass der Primäranschluss für den Rechenknoten (3, 33, 43) als Lichtwellenleiter ausgestaltet ist und dass die Vorrichtung zusätzlich zu dem Primäranschluss eine weitere Datenverbindung als Sekundäranschluss für das Rechenmodul und das Datenspeichermodul des Rechenknotens (3, 33, 43) aufweist, wobei der Primäranschluss einerseits und der Sekundäranschluss andererseits an zwei unterschiedliche Datenhauptstränge (29, 30) angeschlossen sind.

2. Vorrichtung nach Anspruch 1, **dadurch gekennzeichnet, dass** der Sekundäranschluss für den Rechenknoten (3, 33, 43) eine Luftschnittstelle aufweist, wobei die Luftschnittstelle bevorzugt als Richtfunkstrecke (38, 39, 40, 42) und/oder als GSM-Schnittstelle und/oder als 5G-Schnittstelle eingerichtet ist.

3. Vorrichtung nach Anspruch 1 oder 2, **dadurch gekennzeichnet, dass** zusätzlich zu dem Windkraftgenerator und der externen Energiequelle ein Notstromgenerator für die Energieversorgung des Rechenknotens (3, 33, 43) und/oder eine Anschlussschnittstelle für einen Notstromgenerator eingerichtet ist.

4. Vorrichtung nach einem der Ansprüche 1 bis 3, **dadurch gekennzeichnet, dass** ein externes Verteilnetz (17, 24) als weitere Energiequelle für den Rechenknoten (3, 33, 43) dient und dass der Rechenknoten (3, 33, 43) über eine Energieversorgungsleitung (16, 23) mit dem Verteilnetz (17, 24) verbunden ist.

5. Vorrichtung nach Anspruch 4, **dadurch gekennzeichnet, dass** zwei Energieversorgungsleitungen (16, 23) für den Rechenknoten (3, 33, 43) geführt sind, wobei die zwei Energieversorgungsleitungen (16, 23) mit einem gleichen Verteilnetz und bevorzugt mit zwei unterschiedlichen Verteilnetzen (17, 24) verbunden sind.

6. Vorrichtung nach Anspruch 5, **dadurch gekennzeichnet, dass** die zwei Verteilnetze (17, 24) mit einem gleichen Übertragungsnetz und bevorzugt mit zwei unterschiedlichen Übertragungsnetzen (18, 25) verbunden sind.

7. Vorrichtung nach einem der Ansprüche 1 bis 6, **dadurch gekennzeichnet, dass** für den Rechenknoten (3, 33, 43) eine Vorrichtung zur unterbrechungsfreien Stromversorgung (7) eingerichtet ist.

8. Vorrichtung nach einem der Ansprüche 1 bis 7, **dadurch gekennzeichnet, dass** für die Betriebssteuerung (6) der Windenergieanlage (1, 31, 41) und für den Rechenknoten (3, 33, 43) eine gemeinsame Kühleinrichtung (10) eingerichtet ist.

## Claims

1. Decentralized power supply and IT hosting device comprising a wind power installation (1, 31, 41) having a vertically extending tower (2), a machine housing rotatably held at one end of the tower (2) in a horizontal plane, a wind power generator enclosed by the machine housing, a rotor interacting with the wind power generator, a power supply line (16, 23) leading from the wind power generator to an external power line (17, 24), and an operations controller (6), a computing node (3, 33, 43) provided in the tower (2) of the wind power installation (1, 31, 41) and having at least one computing module and at least one data storage module, and a data line (32, 34, 35) leading to the device and serving as a primary connection for implementing remote access to the computing module and/or the data storage module of the computing node (3, 33, 43), the computing module and the data storage module of the computing node (3, 33, 43) being connected on the one hand via an internal control energy supply line (27) to the wind power generator of the wind power installation (1, 31, 41) in such a way that electrical energy for operating the computing node (3, 33, 43) is supplied by the wind power generator via the internal control energy supply line (27) and on the other hand to at least one further external energy source, **characterized in that** the data line (32, 34, 35) leading to the device is set up as a primary connection also for implementing remote access to the operations control (6) of the wind power installation (1, 31, 41), the primary connection for the computing node (3, 33, 43) is designed as an optical waveguide, the device has, in addition to the primary connection, a further data connection as a secondary connection for the computing module and the data storage module of the computing node (3, 33, 43), and the primary connection on the one hand and the secondary connection on the other hand are connected to two different main data lines (29, 30).

2. Device according to claim 1, **characterized in that** the secondary connection for the computing node (3, 33, 43) comprises an air interface preferably set up as a radio link (38, 39, 40, 42) and/or as a GSM interface and/or as a 5G interface.

3. Device according to claim 1 or 2, **characterized in that** in addition to the wind power generator and the external energy source, an emergency power generator for supplying energy to the computing node (3, 33, 43) and/or a connection interface for an emergency power generator is set up.

4. Device according to one of claims 1 to 3, **characterized in that** an external distribution network (17, 24) serves as a further energy source for the computing node (3, 33, 43) and the computing node (3, 33, 43) is connected to the distribution network (17, 24) via an energy supply line (16, 23).

5. Device according to claim 4, **characterized in that** two power supply lines (16, 23) lead to the computing node (3, 33, 43) and are connected to the same distribution network and preferably to two different distribution networks (17, 24).

6. Device according to claim 5, **characterized in that** the two distribution networks (17, 24) are connected to an identical transmission network and preferably to two different transmission networks (18, 25).

7. Device according to one of claims 1 to 6, **characterized in that** a device for uninterrupted power supply (7) is set up for the computing node (3, 33, 43).

8. Device according to one of claims 1 to 7, **characterized in that** a common cooling device (10) is set up for the operations controller (6) of the wind power installation (1, 31, 41) and for the computing node (3, 33, 43).

## Revendications

1. Dispositif décentralisé d'alimentation en énergie et d'hébergement informatique comprenant une installation éolienne (1, 31, 41) avec une tour (2) s'étendant verticalement, un carter de machine maintenu de manière rotative à l'extrémité de la tour (2) dans un plan horizontal, un générateur d'énergie éolienne entouré par le carter de machine, un rotor interagissant avec le générateur d'énergie éolienne, une ligne d'alimentation électrique (16) menant du générateur d'énergie éolienne à une ligne électrique externe (17, 24) et une commande opérationnelle (6), un nœud de calcul (3, 33, 43) prévu dans la tour (2) de la installation éolienne (1, 31, 41) avec au moins un module de calcul et avec au moins un module de stockage de données, et une ligne de données (32, 34, 35) acheminée vers le dispositif et servant de connexion primaire pour réaliser un accès à distance au module de calcul et/ou au module de stockage de données du nœud de calcul (3, 33, 43), le module de calcul et le module de stockage des données du nœud de calcul (3, 33, 43) étant reliés d'une part par une ligne interne d'alimentation en énergie de commande (27) au générateur éolien de l'installation éolienne (1, 31, 41) de telle sorte que l'énergie électrique nécessaire au fonctionnement du nœud de calcul (3) est fournie par le générateur éolien par l'intermédiaire de la ligne interne d'alimentation en énergie de commande (27) et d'autre part à une autre source d'énergie externe, **caractérisé en ce que** la ligne de données (32, 34, 35) acheminée vers le dispositif sert de connexion primaire également pour réaliser un accès à distance à la commande opérationnelle (6) de la installation éolienne (1, 31, 41), la connexion primaire pour le nœud de calcul (3, 33, 43) est conçu comme un guide d'ondes optiques, le dispositif dispose, en plus de la connexion primaire, d'une autre connexion de données comme connexion secondaire pour le module de calcul et le module de stockage de données du nœud de calcul (3, 33, 43) et la connexion primaire d'une part et la connexion secondaire d'autre part sont reliées à deux différentes lignes principales de données (29, 30).

2. Dispositif selon la revendication 1, **caractérisé en ce que** la connexion secondaire pour le nœud de calcul (3, 33, 43) possède une interface aérienne de préférence sous la forme d'une liaison radio (38, 39, 40, 42) et/ou d'une interface GSM et/ou d'une interface 5G.

3. Dispositif selon la revendication 1 ou 2, **caractérisé en ce qu'**en plus du générateur éolien et de la source d'énergie externe, un générateur de secours pour alimenter en énergie le nœud de calcul (3, 33, 43) et/ou une interface de connexion pour un générateur de secours est mise en place.

4. Dispositif selon l'une des revendications 1 à 3, **caractérisé en ce qu'**un externe réseau de distribution (17, 24) sert de source d'énergie supplémentaire pour le nœud de calcul (3, 33, 43) et le nœud de calcul (3, 33, 43) est relié au réseau de distribution (17, 24) par une ligne d'alimentation en énergie (16, 23).

5. Dispositif selon la revendication 4, **caractérisé en ce que** deux lignes d'alimentation électrique (16, 23) sont acheminées pour le nœud de calcul (3, 33, 43) et reliées au même réseau de distribution et de préférence à deux différents réseaux de distribution (17, 24).

6. Dispositif selon la revendication 5, **caractérisé en ce que** les deux réseaux de distribution (17, 24) sont reliés au même réseau de transmission et de préférence à deux différents réseaux de transmission (18, 25).

7. Dispositif selon l'une des revendications 1 à 6, **caractérisé en ce qu'**un dispositif d'alimentation électrique ininterrompue (7) est mis en place pour le nœud de calcul (3, 33, 43).

8. Dispositif selon l'une des revendications 1 à 7, **caractérisé en ce qu'**un dispositif de refroidissement commun (10) est mis en place pour la commande opérationnelle (6) de l'installation éolienne (1, 31, 41) et pour le nœud de calcul (3, 33, 43).
